Europäisches Patentamt

(19) European Patent Office

Office européen des brevets

(11) **EP 0 626 880 B1**

(12) **EUROPEAN PATENT SPECIFICATION**

(45) Date of publication and mention
of the grant of the patent:
**06.05.1998 Bulletin 1998/19**

(21) Application number: **93905259.3**

(22) Date of filing: **18.02.1993**

(51) Int. Cl.$^6$: **B01D 45/02**, B01D 49/00

(86) International application number:
**PCT/EP93/00392**

(87) International publication number:
**WO 93/15822** (19.08.1993 Gazette 1993/20)

(54) **METHOD AND APPARATUS FOR REMOVING SUSPENDED FINE PARTICLES FROM GASES**

VERFAHREN UND VORRICHTUNG ZUR ENTFERNUNG SUSPENDIERTER FEINPARTIKEL AUS GASEN

PROCEDE ET APPAREIL D'EXTRACTION DE PARTICULES FINES EN SUSPENSION DANS LES GAZ

(84) Designated Contracting States:
**BE CH DE DK FR GB IT LI SE**

(30) Priority: **18.02.1992 GB 9203437**

(43) Date of publication of application:
**07.12.1994 Bulletin 1994/49**

(73) Proprietors:
• **INSTITUT FRANCAIS DU PETROLE**
  **92506 Rueil-Malmaison (FR)**
• **Dullien, Francis, A., L.**
  **Kitchener, Ontario N2N 1Z4 (CA)**

(72) Inventor:
**DULLIEN, Francis, A., L.**
**Kitchener, Ontario N2N 1Z4 (CA)**

(74) Representative:
**Andreeff, François et al**
**INSTITUT FRANCAIS DU PETROLE**
**4, avenue de Bois-Préau**
**92502 Rueil-Malmaison (FR)**

(56) References cited:
**DE-C- 921 784**

• **WASTE TREATMENT AND UTILIZATION, Theory and Practice of Waste Management, Proceedings of the Inter- national Symposium held at the University of Waterloo, July 05-07, 1978, Waterloo, Ontario, Canada, Pergamon Press, Oxford F.A.L. DULLIEN et al. "41. The Waterloo Scrubber Part I: The aerodynamic capture of particles.", pages 465-486**

EP 0 626 880 B1

## Description

The present invention is concerned with the removal of suspended very fine particles from industrial gases.

In particular, the present invention facilitates separation and collection of particulate matter, such as dust, mist, fumes, smoke, etc., dispersed in a gas, in a state of turbulent flow, by taking advantage of certain effects associated with turbulence in a novel and particular way using purely mechanical means.

It is well known to those skilled in the art of fluid mechanics and related fields of endeavour, that fine particles dispersed in a fluid in a turbulent state of flow tend to follow the turbulent eddies and velocity fluctuations of the turbulent fluid. This is an experience shared by many non-experts who have witnessed a blizzard or a dust storm, where snow flakes or dust particles swirl around in atmospheric turbulence, carried by the wind. Thus, turbulence keeps particles suspended in the fluid well mixed.

The removal of very fine particles, typically in the size range of about 0.01 to 100 microns, from industrial gases is a difficult and expensive operation to perform efficiently. Devices traditionally employed for this purpose involve electrostatic precipitators, a variety of filters and wet scrubbers. Scrubbers are used also for the removal of noxious gases from industrial gases. Cyclone collectors have been traditionally used for the removal of particulates larger than about 5 microns and a concerted effort has been made recently to extend their scope down to about 1 micron particulate size.

At the present time, there does not exist an inexpensive industrial gas cleaning device that would efficiently collect very fine particulates either without or with simultaneous removal of noxious gases.

The present invention makes use of the mixing effects of turbulence for the separation and collection of dispersed fine particles in a novel and special way without the necessity of sticky substances or electricity.

The gas, containing dispersed and suspended particles often is, in engineering applications, in a turbulent state while passing through a duct or some processing plant. Such ducts or plants are bounded by solid walls, made mostly of metal but occasionally also of other types of solid materials. As the turbulent stream passes through such ducts or processing plants, the particles suspended and dispersed in the fluid are being continuously mixed by the action of turbulence and, as a result, continually new particles are carried by the turbulence to the close proximity of the solid walls of the equipment. The essence of this invention is to capture, trap and collect the fine suspended particles as they are carried continually by the mixing action of turbulence across a defined surface and in a novel manner hereafter described.

As is well known, turbulence gradually dies out, or decays, as the walls of the equipment are approached, i.e., there is no turbulence in the immediate vicinity of the wall, in the so-called "viscous sublayer". Suspended particles of sufficient inertia are known to be carried by the mixing action of turbulence into the viscous sublayer where they can be captured, somewhat like rocks that when thrown into a quiescent shallow pond sink to the bottom. Accordingly, this invention comprises capturing, trapping and collecting the particles carried by turbulent mixing into stagnant turbulence-free zones of the fluid, gas or liquid, which do not correspond to the viscous sublayer near the solid walls, but rather are created specially for this purpose.

In this invention, stagnant, turbulence-free zones are created in the duct or in the plant by limiting the flow only to a fraction of the duct or plant while, in the rest of the duct or of the plant, the fluid cannot flow and, therefore, the turbulence gradually dies out, or decays, with increasing distance from the turbulent stream. This result can be accomplished in a very large number of different ways, all of which are considered to fall within the scope of this invention, because all of them serve the same purpose, constituting the essence of this invention.

The present invention removes fine particulates, usually air-borne dust, fog, mist or fumes, from gas streams in a unique and efficient manner. In the present invention, the gas stream, in highly turbulent flow, is passed in a housing above a plurality of closely spaced vertical collector plates positioned perpendicular to the gas stream.

The particulates are carried by the turbulent eddies into the gaps between vertical collector plates where there is no net gas flow and where the eddies decay. The particulates are trapped and they deposit on the solid surfaces by inertial impaction and Brownian diffusion mechanisms. The deposits either fall or flow down to the bottom of said housing as they become sufficiently thick to permit such dislodgement or flow by the action of gravitational forces. The solid or the liquid is discharged from the bottom of the equipment.

For the removal of ultrafine particulates in the size range below about 0.5 micron the gaps between the vertical collector plates are loosely packed with fibers of about 0.1 micron diameter or less and thereby the solid surface area available for collection by Brownian diffusion mechanism is greatly increased.

Accordingly, in the present invention, very fine dust or mist particles, generally of particle diameter of from about 0.01 to about 100 micron are removed from gas streams and are collected in line and in a continuous manner. In addition, by injecting a fine spray or fog of atomized liquid into the gas stream upstream from the device noxious gases absorbed by the turbulent spray are also removed from the gas stream along with the fine spray or fog impinging on the vertical collector plates.

More precisely, the subject-matter of present invention is a method of removing particulates from a gas stream containing the same which comprises :

a) conveying said gas stream in highly turbulent flow through at least one flow passage situated over at least one stagnant region of gas where there is not net gas flow and which communicates with said gas stream,

b) enabling the turbulent eddies of said gas stream carrying suspended particulates to penetrate and then decay in said stagnant region where said particulates are trapped and deposited preferably by purely mechanical means on solid surfaces,

c) dislodging the deposits of said particulates mainly by the action of gravity,

d) removing said deposits.

The removing of said deposits can operate either continuously by means of screw conveyors, or by periodically opening louvres or other suitable means situated at the bottom of said mechanical trapping means.

The method according to the present invention can further comprise the step of discharging said deposits into hoppers or other appropriate means.

Advantageously, the turbulence in said gas stream is enhanced by placing a grid or several grids ahead of or in the flow passages.

Moreover, upstream from said housing an atomizer can discharge into the gas stream a fine spray of a suitable liquid or slurry that scrubs suspended particulates and noxious gases from the gas stream and is subsequently precipitated on solid surfaces and is discharged from the bottom of said housing.

The subject-matter of the present application is also concerned with an apparatus for removing particulates from a gas stream containing the same wherein it comprises at least a housing having :

- at least one passage for conveying the said fluid stream in highly turbulent flow,
- vertical collector plates orientated perpendicular to the direction of flow of the gas stream which communicate with the at least one passage in order to create thereunder at least one stagnant region where said particulates are trapped.

As above stated, said stagnant regions are obtained by placing parallel vertical plates of from about 0.1 to about 3 mm thickness of from about 3 to about 10 cm height and about 0,5 to about 5 cm apart from each other, underneath the flow passage, so that the bottom of said passage is formed by the upper edges of said vertical plates and the gaps present between said edges and the particulates carried by said eddies between said plates deposit on the plates surface by inertial impaction and by Brownian diffusion.

In some cases it can be advantageous that said stagnant regions between said vertical plates are packed with a suitable filter medium consisting of fibers of a diameters from about 0.01 to about 1 micron said filter medium having solids fraction of from about 0.001 to about 0.1 on the surface of which submicron particulates deposit by Brownian diffusion.

According to one embodiment of the present invention, both said vertical plates and said passage have uniform height along the entire length of said at least one passage.

In another embodiment, the heights of said vertical plates is increased gradually from the upstream end of said passage over a distance of from about 5 to about 30 cm from about 3 cm to a maximum value of about 10 cm which is maintained constant throughout the rest of the lenght of said passage resulting in an initial gradual decrease of the height of said passage from about 8 cm to a minimum value of about 1 cm which remains constant for the rest of their length.

Without departing from the scope of the invention, the top ends of said vertical plates are bent or curved in the direction opposite to said gas flow.

Said housing and said passage can have their axis either parallel or inclined of from about 20 to about 60 degrees with respect to the horizontal.

Finally, according to the invention, two or more of said housings may be arranged one above the other with a suitable distance kept between them, the deposits being then discharged from housings by screw conveyors or by pipes located between said housings.

In another embodiment, said housings are oriented with an angle with respect to the horizontal. In this case, the deposits slide or flow downwards on the outside top surface of the housings positioned underneath, the deposits discharged from said housings are oriented at an angle with respect to the horizontal and flow downwards on the outside top surface of said housings positioned underneath.

The removal efficiency $\eta$ of such an apparatus can be expressed by the following relationship

$$\eta = 1 - \exp - \frac{Lw}{Sv}$$

where L is the passage length, S is the passage height, v is the gas velocity in the passage and w is an effective migration velocity of the dust across the plane forming the boundary between the passages and the stagnant regions.

w is independent of L but it depends on the intensity of turbulence and it increases slower than in direct proportion with v and much slower than in inverse proportion with S. In addition, w is influenced by other constructional features of the equipment such as the width of a passage, the gap size between the vertical collector plates, the height of the vertical collector plates, the initial conditions of the gas entering the passages and the surface area per unit volume available for deposition of particulates. Typically, for a dust of a median particle size of about 2 microns, the values of w found have been in the range of 40 to 100 cm/s, with L in the range of 1.8 to 3.4 m, S either 2 or 3 cm, the width of the passage of about 30 cm and v in the range of 24 to 57 m/s.

A few of these realizations are described hereinafter merely serving as examples, and certainly not to the exclusion of other possible realizations. In the description which follows, reference is made to the accompanying drawings, in which :

- Figure 1 is a schematic diagram of a single passage turbulent precipitator in accordance with one embodiment of the invention,
- Figure 2 is a side elevational view of a duct constructed in accordance with one embodiment of this invention,
- Figure 3 is a side elevational view of a duct constructed in accordance with another embodiment of this invention, and
- Figure 4 is a side elevational view of a duct constructed in accordance with a further embodiment of the present invention.

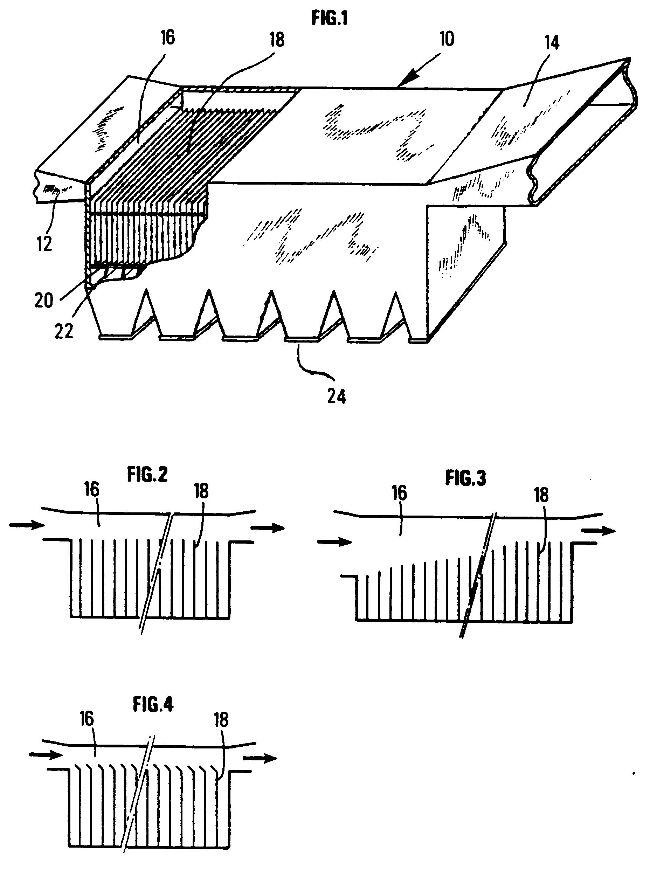

Referring first to Figure 1, the turbulent precipitator comprises a housing 10, an inlet for gas laden with fine particulates and an outlet for clean gas, typically air. In this embodiment, the inlet 12 and outlet 14 are arranged on a generally horizontal axis. Inside the housing 10 the gas flows in passage 16 underneath of which there is a plurality of vertical collector plates 18. Particulates deposit on the surface of plates 18 and the deposit is subsequently removed therefrom essentially by the effect of gravity, fall to the bottom 20 whence they are collected and eventually discharged through the louvres 22 into hoppers 24. An alternative to louvres 22 may consist of a screw conveyor positioned axially at the bottom of the housing.

The entire equipment may be constructed of any convenient material, including various metals and fiberglass, and may be made to withstand wide ranges of temperatures, including very hot gases. The equipment does not require periodic cleaning if dust, fog, mist or fumes are removed in it. For removal of sticky materials such as, e.g. diesel exhaust soot, the turbulent precipitator may be used as a scrubber with the application of finely atomized diesel fuel or any other suitable liquid as the scrubbing fluid.

For the removal of noxious gases, for example for flue gas desulphurization, the turbulent precipitator may be used as a scrubber by injection of a finely atomized fog of a suitable solution or slurry, capable of absorbing the gaseous pollutant, upstream of the turbulent precipitator 10. The fog is subsequently precipitated on the vertical collector plates 18 and the solution or slurry is discharged from the bottom 20 through outlets controlled by suitable valves instead of the louvres 22.

For the removal of ultrafine submicron particles the spaces contained between the vertical collector plates 18 may be packed with ultrafine fibers, preferably less than about 0.1 micron diameter to a packing density of preferably less than about 0.1 volume fraction whereby the surface area per unit volume available for the deposition of ultrafine particles by Brownian motion is greatly increased. In this mode of application removal of the deposit from the fibers may require periodic cleaning.

The turbulent motion of the gas, essential for the operation of the turbulent precipitator, may be enhanced by various means, e.g. by placing a grid or several grids ahead of or in the flow passages.

The most frequent case of suspended fine particles in a fluid stream and occurring in processing or manufacturing industry is when a dusty gas flows in a duct. The flow is usually in the turbulent regime. In this case, a relatively large number of plates can be placed, one behind the other transversely located in the duct and, upstanding from the bottom of the duct, as shown schematically in figures 2 and 3.

In figure 2, both vertical plates 18 and passage 16 have uniform height along the entire length of the passage 16. On figure 3, the heights of said vertical plates is increased gradually from the upstream end of said passages over a distance of from about 5 to about 30 cm from about 3 cm to a maximum value of about 10 cm which is maintained constant throughout the rest of the lenght of said passages resulting in an initial gradual decrease of the height of said passages from about 8 cm to a minimum value of about 1 cm which remains constant for the rest of their length.

Any combination of the two types of arrangements of plates shown in figures 2 and 3 may be employed, including periodic repetition of the arrangement shown in figure 3.

For improved efficiency of dust collection and to inhibit any minor reentrainment of dust, the top edge of each plate may be bent or curved over to face the flow of the gas stream as shown in figure 4.

There is no net flow of gas between the individual plates, but turbulent eddies penetrate the spaces between the plates to a certain depth, carrying also the dust into the traps constituted by the plates. In the spaces between the plates, turbulence dies out rapidly with increasing distance from the surface defined by the positions of the top edges of the plates. Much of the dust carried by the eddies between the plates is not carried back by the gas into the flow channel at the top of the dust partly because the dust has reached the portion of gas stream that is stagnant and partly because the dust has been deposited by inertia on the surface of the plate on the downstream side of the gap between two plates and by Brownian motion on both surfaces of the plate. The dust builds up on the plates to a certain thickness beyond which it becomes unstable and falls to the louvred bottom of the duct from which the accumulated dust particles may be removed periodically by opening the louvres and discharging the dust into hoppers.

Without departing from the scope of the invention, the dust particles may be removed continuously by means of a screw conveyor.

Otherwise, the unit is not subject to clogging and may be used for long periods between removals of accumulated solids. There is no significant reentrainment of the deposited dust from the plates up to gas flow velocities on the order of 100 ms$^{-1}$. The height of the open part of the duct is on the order of magnitude of 1 cm and the separation of two adjacent plates is also of the same order, although these dimensions may be varied, dependent on the nature of the gas stream, the flow rate and the contamination loading of the gas stream.

Using these kinds of arrangement of plates in a duct, removal efficiencies of 1.5 μm mean particle diameter ASP-100 aluminum silicate pigment on the order of 99 % can be attained over a duct length of approximately 5 m, with pressure losses on the order of a few inches of water column.

According to one example, removal efficiency for a gas stream containing diameter ASP 100 aluminum silicate pigment can reach a range between 80 % and 86 % for a duct length of 2,7 m and a passage height of 3 cm with gas velocities between 35 m/s and 24 m/s.

The collection efficiency is brought to 93 % with a passage height of about 2 cm and a passage velocity of about 24 m/s.

The same principle of permitting turbulent eddies to penetrate calming regions with the purpose of arresting and collecting fine particles carried along by turbulence, may be applied to other gas cleaning equipment. For example, in another embodiment of the invention, the duct through which the particulate-laden gas stream flows may be divided into two parts, by mounting a perforated horizontal partition where gas flow is restricted to the portion of the duct above the partition, whereas in the space under the perforated partition, there is no gas flow. Turbulent eddies penetrate through the openings in the partition and die out in the quiescent zone underneath. The dust carried by the eddies through the perforations cannot return into the gas stream and settles to the bottom of the duct.

In addition, cyclone separators may be equipped with vertical fins, resembling turbine blades, the interior of the cylindrical portion of the cyclone separator, which may collect particles of under 5 micron size with high efficiency, particularly if a large number of turns is made by the gas.

As stated ahead of the specification, a plurality of individual housings may be arranged one above the other with a suitable space between them.

EXAMPLES OF POTENTIAL APPLICATIONS OF THE INVENTION

**Type of Plants**

1. *Power Stations* : flue gas desulphurization in all plants ; pulverized fuel fired boilers ; refuse burning boilers ; lignite stoker fired boilers ; lignite pulverized fuel fired boilers (hammer mills).

2. *Coal Industry* : Lignite rotary type stream dryer ; lignite plate type steam dryer ; combustion gas lignite dryer ; lignite mill dryer ; lignite conveying system de-dusting ; bituminous coal tube type steam dryer ; bituminous coal conveying system de-dusting ; bituminous coal-coke grinding plant.

3. *Coal Gas Industry* : peat gas producer ; cracking plant for natural gas ; producer gas from lignite briquettes ; producer gas from semibituminous lignite : shale-gas cleaning plant ; coke oven town gas cleaning ; coke oven gas cleaning ; oil carburetted water gas cleaning ; tar carburetted water gas cleaning.

4. *Paper Industry* : black liquor burning plant.

5. *Cement Industry* : rotary kiln dry process ; lepol rotary kiln dry process ; rotary kiln wet process ; rotary kiln with calciner, wet process ; vertical kiln ; raw material dryer ; cement mill ; packing machine.

6. *Chemical Industry* : pyrites roaster ; pyrites roaster ; pyrites roaster : pyrites roaster : acid mist from sulphur burning furnace ; sulphuric acid mist following cooler tower ; blende roaster ; arsenic and sulphuric acid mist removal ; tail gas for sulphuric acid concentration ; elemental sulphur fume from hydrogen sulphide combustion plant.

7. *Mineral Earths and Salts Processing* : bauxite dryer ; bauxite calcining and processing kiln ; alumina calciner with multicyclone precleaner : potassium chloride dryer ; fuller's earth dryer.

8. *Metallurgical Industry* : vertical blast furnace : lead ore ; rotary kiln processing : zinc ores : vertical blast furnace : tin ores ; vertical blast furnace : antimony ores ; copper convertors ; rotary kiln for nickel bearing iron ores ; ferrosilicon producers ; lead production ; calcium carbide producers.

9. *Industries with the Following Products* : abrasives ; asbestor fibres ; graphite ; gypsum ; lamp black ; limestone ; rubber ; sand ; silica flour ; garbage incinerators ; building materials ; soap ; soapstone : talc ; wood flour ; sandblasting ; ceramic polishing ; metal polishing ; paint pigments ; fertilizers ; ore sintering ; expanded pearlite ; etc.

10. *Food Products* : flour (many types) ; sugars ; dried dairy products ; cereals ; salt and spices ; baking aids ; instant food products ; etc.

11. *Air conditioning* : a dust remover according to the invention can be placed in series with an air conditioner.

**Typical Particle Size Ranges for Dust or Mist Contaminants to be Removed from Industrial Gases**

| Source of Gas ($\mu$m) | Dust or Mist | Particle Size |
|---|---|---|
| *Iron and Steel Industry* | | |
| Gray iron cupola | Iron, coke, silica dust | 0.1 - 10 |
| Oxygen steel converter | Iron oxyde | 0.5 - 2 |
| Steel open-hearth furnace (scrap) | Iron and zinc oxyde | 0.08 - 1.00 |
| Steel open-hearth furnace (oxygen lanced) | Iron oxide | 0.02 - 0.50 |
| Blast furnace (iron) | Iron ore and coke dust | 0.5 - 20 |
| Electric furnace | Ferro-manganese fume | 0.1 - 1 |
| Electric furnace | Ferro silicon dust | 0.1 - 1 |
| Rotary kiln - iron reduction | Iron, carbon | 0.5 - 50 |
| Crushing and screening | Taconite iron ore dust | 0.5 - 100 |
| | | |
| *Chemical Industry* | | |
| Acid - humidified SO$_3$ | Sulphuric acid mist | |
| (a) scrub with water | | -- |
| (b) scrub with 40 % acid | | -- |
| Acid concentrator | Sulphuric acid mist | -- |
| Copperas roasting kiln | Sulphuric acid mist | -- |
| Chlorosulfonic acid plant | Sulphuric acid mist | -- |
| Phosphoric acid plant | Orthophosphoric acid mist | -- |
| Dry ice plant | Amine fog | -- |
| Wood distillation plant | Tar and acetic acid | -- |

6

| Titanium chloride plant, titanium dioxide dryer | Titanium dioxide, hydrogen chloride fume | 0.5 - 1 |
|---|---|---|
| Spray dryers | Detergents, fume and odor | -- |
| Flash dryer | Furfural dust | 0.1 - 1 |

*Non-ferrous Metals Industry*

| Blast furnace (sec. lead) | Lead compounds | 0.1 - 1 |
|---|---|---|
| Reverberatory lead furnace | Lean and tin compounds | 0.1 - 0.85 |
| Ajax furnace - magnesium alloy | Aluminium chloride | 0.1 - 0.9 |
| Zinc sintering | Zinc and lead oxide dusts | 0.1 - 1 |
| Reverberatory brass furnace | Zinc oxide fume | 0.05 - 0.5 |

*Mineral Products Industry*

| Lime kiln | Lime dust | 1 - 50 |
|---|---|---|
| Lime kiln | Soda fume | 0.3 - 1 |
| Asphalt stone dryer | Limestone and rock dust | 1 - 50 |
| Cement kiln | Cement dust | 0.5 - 55 |

*Petroleum Industry*

| Catalytic reformer | Catalyst dust | 0.5 - 50 |
|---|---|---|
| Acid concentrator | Sulphuric acid mist | -- |
| TCC catalyst regenerator | Oil fumes | -- |

*Fertilizer Industry*

| Fertilizer dryer | Ammonium chloride fumes | 0.05 - 1 |
|---|---|---|
| Superphosphate den and mixer | Fluorine compounds | -- |

*Pulp and Paper Industry*

| Lime kiln | Lime dust | 0.1 - 50 |
|---|---|---|
| Lime kiln | Soda fume | 0.1 - 2 |
| Black liquor recovery boiler | Salt cake | -- |

*Miscellaneous*

| Pickling tanks | Hydrogen chloride fumes | -- |
|---|---|---|
| Boiler flue gas | Fly ash | 0.1 - 3 |
| Sodium disposal incinerator | Sodium oxide fumes | 0.1 - 0.3 |

In summary of this disclosure, the present invention provides a novel and inexpensive manner of removal of fine particulate dust, fog, mist or fumes from gas streams in a continuous in-line procedure involving transport of the particulates by turbulent eddies into spaces where the gas is quiescent and subsequent deposition of the particulates in those spaces on solid surfaces present, coupled with absorption by an atomized liquid spray or fog of noxious gases.

**Claims**

1. A method of removing particulates from gas stream containing the same which comprises :

    a) conveying said gas stream in highly turbulent flow through at least one flow passage situated over at least one stagnant region of gas where there is no net gas flow and which communicates with said gas stream,
    b) enabling the turbulent eddies of said gas stream carrying suspended particulates to penetrate and then decay in said stagnant region where said particulates arc trapped and deposited preferably by purely mechanical means on solid surfaces,
    c) dislodging the deposits of said particulates, mainly by the action of gravity
    d) removing said deposits.

2. The method of claim 1 wherein the turbulence in said gas stream is enhanced by placing a grid or several grids ahead of or in the flow passages.

3. The method of claims 1 to 2, wherein upstream from said housing an atomizer discharges into the gas stream a fine spray of a suitable liquid or slurry that scrubs suspended particulates and noxious gases from the gas stream and is subsequently precipitated on said solid surfaces and is discharged from the bottom of said housing.

4. The method of claims 1 to 3, wherein said particles have diameter of from about 0,01 to 100 microns, wherein said gas stream has a velocity of from about 10 to about 50 m/s, and wherein said flow passage are about 1 to about 8 cm high and about 5 to about 30 cm wide.

5. Method of claims 1 to 4 wherein it further comprises the final step of discharging said deposits into hoppers or other appropriate means.

6. Apparatus for removing particulates from gas and liquid streams containing the same wherein it comprises at least a housing (10) having :

    -  at least one passage (16) for conveying the said fluid stream in highly turbulent flow,
    -  vertical collector plates (18) orientated perpendicular to the direction of flow of the gas stream which communicate with the at least one passage in order to create thereunder at least one stagnant region where said particulates are trapped.

7. The apparatus of claim 6, wherein said stagnant regions are obtained by placing parallel vertical plates (18) of from about 0.1 to about 3 mm thickness of from about 3 to 10 cm height and about 0,5 to about 5 cm apart from each other, underneath the flow passage, so that the bottom of said passage (16) is formed by the upper edges of said vertical plates and the gaps present between said edges and the particulates carried by said eddies between said plates deposit on the plates surface by inertial impaction and by Brownian diffusion.

8. The apparatus of claims 6 or 7, wherein said stagnant regions between said vertical plates (18) are packed with a suitable filter medium consisting of fibers of a diameter from about 0.01 to about 1 micron, said filter medium having a solid fraction of from about 0.001 to about 0.1 on the surface of which submicron particulates deposit by Brownian diffusion.

9. The apparatus of claims 6 to 8, wherein both said vertical plates and said passage have uniform height along the entire length of said at least one flow passage.

10. The apparatus of claims 6 to 9, wherein the heights of said vertical plates is increased gradually from the upstream end of said passage over a distance of from about 5 to about 30 cm from about to 3 cm to a maximum value of about 10 cm which is maintained constant throughout the rest of the lenght of said passage resulting in an initial gradual decrease of the height of said passage from about 8 cm to a minimum value of about 1 cm which remains constant for the rest of their length.

11. The apparatus of claims 6 to 10, wherein the top ends of said vertical plates are bent or curved in the direction opposite to said gas flow.

12. The apparatus of claims 6 to 11, wherein said housing and said passage (16) are arranged with their axis parallel to the horizontal.

13. The apparatus of claims 6 to 12, wherein said housing (10) and said passage (16) are arranged with their axis inclined upward at an angle of from about 20 to about 60 degrees with respect to the horizontal.

14. The apparatus of claims 6 to 13, wherein two or more of said housings are arranged one above the other with a suitable distance kept between them and said deposits, discharged from said housings, are removed by screw conveyors or by pipes located between said housings.

15. The apparatus of claim 14, wherein the deposits discharged from said housings oriented at an angle with respect to the horizontal slide or flow downwards on the outside top surface of said housings positioned underneath.

16. The apparatus of claims 6 to 15, wherein said particles have diameter of from about 0,01 to 100 microns, wherein said gas stream has a velocity of from about 10 to about 50 m/s, and wherein said flow passages are about 1 to about 8 cm high and about 5 to about 30 cm wide.

**Patentansprüche**

1. Verfahren zum Entfernen von Feststoffteilchen auf sie enthaltenden Gasströmen, das umfaßt:

a) Führen dieses Gasstroms in hoch-turbulenter Strömung durch wenigstens einen Strömungsdurchlaß, der über wenigstens einem stagnierenden Gasbereich sich befindet, wo eine reine Gasströmung existiert und der mit diesem Gasstrom in Verbindung steht,
b) Ermöglichen des Eindringens der turbulenten Wirbel dieses suspendierte Feststoffteilchen tragenden Gasstroms und dann Abfall in diesen stagnierenden Bereich, wo diese Feststoffteilchen eingefangen und vorzugsweise durch rein mechanische Mittel auf festen Flächen abgeschieden werden,
c) Verdrängen der Abscheidungen dieser Feststoffteilchen, hauptsächlich durch Schwerkraftswirkung und
d) Entfernen dieser Abscheidungen.

2. Verfahren nach Anspruch 1, wobei die Turbulenz in diesem Gasstrom gesteigert wird, indem ein Gitter oder mehrere Gitter vor oder in den Strömungsdurchlässen angeordnet werden.

3. Verfahren nach den Ansprüchen 1 bis 2, wobei in Strömungsrichtung vor diesem Gehäuse ein Zerstäuber in den Gasstrom eine Feinversprühung einer geeigneten Flüssigkeit oder Aufschlämmung austrägt, das die suspendierten Partikel und schädlichen Gase aus dem Gasstrom wäscht und anschließend auf diesen festen Flächen abgeschieden und vom Boden dieses Gehäuses ausgetragen wird.

4. Verfahren nach den Ansprüchen 1 bis 3, wobei diese Partikel Durchmesser zwischen 0,01 bis 100 micron haben, dieser Gasstrom über eine Geschwindigkeit zwischen etwa 10 und etwa 50 m/s verfügt und diese Strömungsdurchlässe etwa 1 bis etwa 8 cm hoch und etwa 5 bis etwa 30 cm breit sind.

5. Verfahren nach den Ansprüchen 1 bis 4, wobei weiterhin der letzte Schritt des Austragens der Abscheidungen in Behälter oder andere geeignete Mittel umfaßt wird.

6. Vorrichtung zur Entfernung von Feststoffteilchen aus sie enthaltenden Gas- und Flüssigkeitsströmen, wobei sie wenigstens ein Gehäuse (10) umfaßt, das verfügt über:

- wenigstens einen Durchlaß (16) zum Fördern oder Führen dieses Fluidstroms in hoch-turbulenter Strömung,
- vertikale Kollektorplatten (18), die senkrecht zur Strömungsrichtung des Gasstroms orientiert sind, die mit dem wenigstens einen Durchlaß in Verbindung stehen, um hierdrunter wenigstens einen stagnierenden Bereich zu erzeugen, wo diese Feststoffteilchen eingefangen werden.

7. Vorrichtung nach Anspruch 6, wobei diese stagnierenden Bereiche erhalten werden, indem parallele Vertikalplatten (18) von etwa 0,1 bis etwa 3 mm Dicke und von etwa 3 bis 10 cm Höhe und etwa 0,5 bis etwa 5 cm Abstand voneinander unterhalb des Strömungsdurchlasses angeordnet werden, so daß der Boden dieses Durchlasses (16) durch die oberen Ränder dieser vertikalen Platten und die Spalte zwischen diesen Rändern geformt wird und die durch diese Wirbel zwischen diesen Platten getragenen Feststoffteilchen sich auf den Plattenoberflächen durch Trägheitsaufschlag und durch Brownsche Diffusion abscheiden.

8. Vorrichtung nach einem der Ansprüche 6 oder 7, wobei diese stagnierenden Bereiche zwischen diesen vertikalen Platten (18) mit einem geeigneten Filtermedium gepackt sind, das aus Fasern eines Durchmessers von etwa 0,01 bis etwa 1 micron besteht, wobei das Filtermedium eine Feststofffraktion von etwa 0,001 bis etwa 0,1 auf der Oberfläche hat, aus der Submicron-Partikel bzw. Feststoffteilchen durch Brownsche Diffusion sich abscheiden.

9. Vorrichtung nach den Ansprüche 6 bis 8, wobei sowohl die vertikalen Platten wie der Durchlaß eine gleichförmige Höhe über die gesamte Länge dieses wenigstens einen Strömungsdurchlasses haben.

10. Vorrichtung nach den Ansprüchen 6 bis 9, wobei die Höhen dieser vertikalen Platten allmählich vom anströmseitigen Ende dieses Durchlasses über eine Entfernung von etwa 5 bis etwa 30 cm von etwa 3 cm bis zu einem Maximalwert von etwa 10 cm erhöht wird, die konstant über den gesamten Rest der Länge des Durchlasses gehalten wird, was zu einem anfänglichen allmählichen Abfall in der Höhe dieses Durchlasses von etwa 8 cm zu einem Minimalwert von etwa 1 cm führt, der konstant über den Rest ihrer Länge verbleibt.

11. Vorrichtung nach den Ansprüchen 6 bis 10, wobei die oberen Enden dieser vertikalen Platten in der Richtung entgegegesetzt zu diesem Gasstrom gebogen oder gekrümmt sind.

12. Vorrichtung nach einem der Ansprüche 6 bis 11, wobei dieses Gehäuse und dieser Durchlaß (16) mit ihren Achsen parallel zur Horizontalen angeordnet sind.

13. Vorrichtung nach den Ansprüchen 6 bis 12, wobei dieses Gehäuse (10) und dieser Durchlaß (16) mit ihren Achsen nach oben unter einem Winkel zwischen etwa 20 bis etwa 60 Grad bezogen auf die Horizontale geneigt angeordnet sind.

14. Vorrichtung nach den Ansprüchen 6 bis 13, wobei zwei oder mehrere dieser Gehäuse übereinander, mit einem geeignetem Abstand hierzwischen, angeordnet sind und diese von den Gehäusen ausgetragenen Abscheidungen durch Schneckenförderer oder durch zwischen den Gehäusen angeordnete Rohre entfernt werden.

15. Vorrichtung nach Anspruch 14, wobei die aus den unter einem Winkel bezogen auf die Horizontale orientierten Gehäusen ausgetragenen Abscheidungen nach unten auf der außenseitigen Oberfläche dieser darunter positionierten Gehäuse gleiten oder fließen.

16. Vorrichtung nach den Ansprüchen 6 bis 15, wobei diese Partikel einen Durchmesser von etwa 0,01 bis 100 micron haben, wobei dieser Gasstrom über eine Geschwindigkeit zwischen etwa 10 bis etwa 50 m/s verfügt und wobei diese Strömungsdurchlässe etwa 1 bis etwa 8 cm hoch und etwa 5 bis etwa 30 cm breit sind.

**Revendications**

1. Méthode d'élimination de particules contenues dans un flux gazeux, comportant les étapes suivantes :

   a) ledit flux gazeux présentant un écoulement hautement turbulent est transporté à travers au moins un canal d'écoulement situé au-dessus d'au moins une zone stagnante de gaz dans laquelle il n'y a pas d'écoulement net de gaz et qui communique avec ledit flux gazeux,

   b) les tourbillons dudit flux gazeux transportant les particules en suspension peuvent pénétrer, puis décliner dans ladite zone stagnante où lesdites particules sont piégées et se déposent de préférence par des moyens purement mécaniques sur des surfaces solides.

   c) les dépôts desdites particules sont déplacés, essentiellement sous l'action de la gravité,

   d) lesdits dépôts sont éliminés.

2. Méthode selon la revendication 1, caractérisée en ce que la turbulence au sein dudit flux gazeux est renforcée en plaçant une grille ou plusieurs grilles avant ou dans les canaux d'écoulement.

3. Méthode selon les revendications 1 et 2, caractérisée en ce que, en amont dudit logement, un atomiseur injecte dans le flux gazeux un fin jet d'un liquide approprié ou d'un slurry qui débarrasse le flux gazeux des particules en suspension et des gaz nocifs qu'il contient avant d'être précipité sur lesdites surfaces solides et évacué au fond dudit logement.

4. Méthode selon les revendications 1 à 3, caractérisée en ce que lesdites particules ont un diamètre compris entre environ 0,01 et 100 microns, la vitesse dudit flux gazeux est comprise entre environ 10 et environ 50 m/s, et ledit canal d'écoulement présente une hauteur comprise entre environ 1 et environ 8 cm et une largeur comprise entre environ 5 et environ 30 cm.

5. Méthode selon les revendications 1 à 4, caractérisée en ce qu'elle comporte également une étape finale d'évacuation desdits dépôts dans des trémies ou d'autres moyens appropriés.

6. Appareil destiné à l'élimination de particules contenues dans des flux gazeux ou liquides comportant au moins un logement (10) comprenant :

   - au moins un canal (16) destiné à transporter ledit flux liquide présentant un écoulement hautement turbulent,

   - des plaques collectrices verticales (18) orientées perpendiculairement par rapport au sens de l'écoulement du flux gazeux, qui communiquent avec au moins un canal en vue de former au-dessous au moins une zone stagnante où lesdites particules sont piégées.

7. Appareil selon la revendication 6, caractérisé en ce que lesdites zones stagnantes sont obtenues en plaçant sous le canal d'écoulement des plaques collectrices verticales (18) d'une épaisseur comprise entre environ 0,1 et environ 3 mm, d'une hauteur comprise entre environ 3 et 10 cm et espacées d'environ 0.5 à environ 5 cm, de telle manière que le fond dudit canal (16) soit constitué par les bords supérieurs desdites plaques verticales et les espaces compris entre lesdits bords, et les particules entraînées par lesdits tourbillons entre lesdites plaques se déposent à la surface des plaques par choc inertiel et par diffusion Brownienne.

8. Appareil selon les revendications 6 ou 7, caractérisé en ce que lesdites zones stagnantes comprises entre lesdites plaques verticales (18) sont garnies d'un milieu filtrant approprié constitué de fibres d'un diamètre compris entre environ 0.01 et environ 1 micron, ledit milieu filtrant comportant une portion pleine comprise entre environ 0,001 et 0,1 à la surface de laquelle les particules d'une taille inférieure au micron se déposent par diffusion Brownienne.

9. Appareil selon les revendications 6 à 8, caractérisé en ce que lesdites plaques verticales et ledit canal présentent une hauteur uniforme sur toute la longueur de l'un au moins desdits canaux d'écoulement.

10. Appareil selon les revendications 6 à 9, caractérisé en ce que la hauteur desdites plaques verticales augmente graduellement depuis l'extrémité amont dudit canal sur une distance comprise entre environ 5 et environ 30 cm, d'une valeur comprise entre environ 3 cm et une valeur maximum d'environ 10 cm qui est maintenue constante sur le reste de la longueur dudit canal, ce qui se traduit par une diminution graduelle initiale de la hauteur dudit canal d'une valeur comprise entre environ 8 cm et une valeur minimale d'environ 1 cm qui reste constante sur le reste de leur longueur.

11. Appareil selon les revendications 6 à 10, caractérisé en ce que les bords supérieurs desdites plaques verticales sont recourbés ou incurvés dans le sens opposé audit écoulement gazeux.

12. Appareil selon les revendications 6 à 11, caractérisé en ce que ledit logement et ledit canal (16) sont disposés de manière à ce que leur axe soit parallèle par rapport à l'horizontale.

13. Appareil selon les revendications 6 à 12, caractérisé en ce que ledit logement (10) et ledit canal (16) sont disposés de manière à ce que leur axe soit incliné vers le haut en formant un angle d'environ 20 à environ 60° par rapport à l'horizontale.

14. Appareil selon les revendications 6 à 13, caractérisé en ce que deux desdits logements ou plus sont placés les uns au-dessus des autres en respectant une distance appropriée entre eux et lesdits dépôts évacués desdits logements sont éliminés par des convoyeurs à vis ou des conduits placés entre lesdits logements.

15. Appareil selon la revendication 14, caractérisé en ce que les dépôts évacués desdits logements présentant une orientation formant un angle par rapport à l'horizontale glissent ou s'écoulent vers le bas sur la surface supérieure externe desdits logements placés au-dessous.

16. Appareil selon les revendications 6 à 15, caractérisé en ce que lesdites particules présentent un diamètre compris entre environ 0,01 et 100 microns, la vitesse dudit flux gazeux est comprise entre environ 10 et environ 50 m/s, et ledits canaux d'écoulement ont une hauteur comprise entre environ 1 et environ 8 cm et une largeur comprise entre environ 5 et environ 30 cm.

**FIG.1**

**FIG.2**

**FIG.3**

**FIG.4**